**Europäisches Patentamt**

**European Patent Office**

**Office européen des brevets**

(11) Numéro de publication: **0 094 877**
**B1**

(12) **FASCICULE DE BREVET EUROPEEN**

(45) Date de publication du fascicule du brevet:
**24.06.87**

(21) Numéro de dépôt: **83400957.3**

(22) Date de dépôt: **11.05.83**

(51) Int. Cl.⁴: **A 22 C 5/00**, A 22 C 11/00

(54) **Procédé et installation pour la production en continu de pâtes fines de charcuterie.**

(30) Priorité: **13.05.82 FR 8208379**

(43) Date de publication de la demande:
**23.11.83 Bulletin 83/47**

(45) Mention de la délivrance du brevet:
**24.06.87 Bulletin 87/26**

(84) Etats contractants désignés:
**AT CH DE GB IT LI NL SE**

(56) Documents cités:
**FR - A - 2 428 980**
**GB - A - 862 285**
**GB - A - 2 030 463**
**US - A - 2 971 679**
**US - A - 3 200 867**
**US - A - 3 259 054**
**US - A - 3 326 530**
**US - A - 3 692 539**

(73) Titulaire: **TECNAL S.A. Société dite :, 223, rue Jean-Jaurès, F-79001 Niort Cedex (FR)**

(72) Inventeur: **Lambrecht, Daniel, Décédé (FR)**

(74) Mandataire: **Fort, Jacques et al, CABINET PLASSERAUD 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative à un procédé pour la production en continu de pâtes fines de charcuterie, à partir de divers produits carnés en vue de fabriquer des produits du type saucisses, rillettes, pâtés, etc. selon lequel on mélange les divers produits carnés, qui ont subi un broyage, on fait circuler le mélange continuellement depuis la sortie de la zone de mélange jusqu'à la zone de fin de traitement dans une conduite, et on ajuste la composition chimique du mélange, notamment en corps gras et en eau, en injectant en continu, en un ou plusieurs points de la conduite, les additifs appropriés de manière, après passage dans divers postes de traitement intermédiaires qui peuvent être prévus sur la conduite, à obtenir, dans une zone de fin de traitement, une pâte fine prête à l'emploi. L'invention est relative également à une installation pour la production en continu de pâtes fines de charcuterie, à partir de divers produits carnés, en vue de fabriquer des produits du type saucisses, rillettes, pâtés, etc. comprenant des moyens d'alimentation en un mélange pré-broyé des divers produits carnés, une conduite ou analogue pour faire circuler le mélange continuellement depuis la sortie de la zone de mélange jusqu'à la zone de fin de traitement, divers appareils de traitement en continu de la pâte et des moyens d'injection en continu d'additifs, notamment de corps gras et d'eau, en un ou plusieurs points de l'installation.

De par le brevet US-A-3 200 867, il est déjà connu un procédé et une installation de ce genre, qui toutefois ne permettent pas d'assurer un contrôle et une régulation rigoureux de la qualité et des caractéristiques de la pâte finie à la sortie de la zone de préparation.

Par ailleurs, le brevet US-A-3 259 054 concerne un dispositif permettant d'interrompre automatiquement le processus de fabrication d'un produit comestible à base de viandes lorsque se trouve interrompue la fourniture de la quantité nécessaire prédéterminée d'un conservateur fluide permettant d'obtenir un produit comestible se conservant de façon appropriée. Un tel dispositif n'est cependant pas agencé pour assurer automatiquement une régulation du débit du conservateur en fonction du débit de fabrication de produit comestible ni pour contrôler en fin de fabrication la teneur dudit produit comestible en conservateur.

L'invention a pour but, surtout, de rendre le procédé et l'installation du genre défini précédemment tel que les variations de composition de la pâte fine par rapport à la composition souhaitée soit réduite, que le rendement soit amélioré et que la production soit assurée dans d'excellentes conditions d'hygiène.

Selon un premier aspect de l'invention, un procédé pour la production en continu de pâtes fines de charcuterie à partir de divers produits carnés, du genre défini précédemment; est caractérisé par le fait que, depuis la susdite sortie de la zone de mélange jusqu'à la susdite zone de fin de traitement, la pâte circule en flux continu dans la conduite ou analogue qui est fermée, et par le fait que les débits des additifs injectés en un ou plusieurs points de la conduite fermée sont réglés en fonction, d'une part du débit de pâte du flux continu et, d'autre part, des résultats d'analyse de la pâte fine obtenue dans la zone de fin de traitement.

De préférence, un mélange pré-broyé est véhiculé jusqu'à un dispositif mélangeur comprenant au moins deux appareils mélangeurs destinés à alimenter alternativement et en permanence la conduite fermée branchée sur la sortie du dispositif mélangeur.

Un broyage complémentaire peut être réalisé en au moins deux zones différentes du flux continu et, entre les deux zones de broyage complémentaire, on effectue un dégazage de la pâte. Les additifs, notamment constitués par les corps gras, peuvent être injectés en amont de la première zone de broyage complémentaire.

On peut introduire de la glace sous forme de grains de diamètre réduit, dans la pâte au niveau de la zone de dégazage pour le refroidissement de la pâte.

Selon un second aspect de l'invention, une installation pour la production en continu des pâtes fines de charcuterie, à partir de divers produits carnés, en vue de fabriquer des produits du type saucisses, rillettes, pâtés, etc., du genre défini précédemment, est caractérisée par le fait que la susdite conduite s'étendant depuis la susdite sortie des moyens d'alimentation jusqu'à la susdite zone de fin de traitement est une conduite fermée ou analogue sur laquelle peuvent être prévus les susdits divers appareils de traitement de la pâte en continu, et par le fait qu'elle comprend également des moyens de pompage permettant de faire circuler en un flux continu la pâte dans cette conduite fermée depuis la susdite sortie jusqu'à la susdite zone de fin de traitement et des moyens prévus dans la zone de fin de traitement et permettant d'analyser la pâte finie, ces moyens d'analyse étant combinés avec des moyens permettant de régler le débit d'additifs en fonction du débit de pâte du flux continu et des résultats de l'analyse de la pâte obtenue dans la zone de fin de traitement.

Ces moyens d'alimentation en mélange pré-broyé comprennent, avantageusement, un dispositif mélangeur sur la sortie duquel est branchée la conduite fermée, ce dispositif mélangeur comprenant au moins deux appareils mélangeurs destinés à alimenter alternativement, et en permanence, la conduite fermée.

Le procédé et l'installation conformes à l'invention assurent l'alimentation de la conduite fermée à partir d'une masse de mélange pré-broyé qui a été homogénéisée et dont la composition reste constante jusqu'à ce que la masse considérée soit épuisée. On peut donc, juste avant que cette masse ne commence à être injectée dans la conduite, déterminer la composition de cette masse et effectuer un premier réglage grossier des débits d'additifs en fonction de cette composition. Les réglages ultérieurs des débits des additifs injectés en fonction des résultats d'analyse de la pâte obtenue dans la zone de fin de traitement seront des réglages fins qui permettront de maintenir, avec précision, la composition de la pâte finie à la valeur optimale.

L'installation comporte une station de nettoyage automatique, pouvant comprendre un matériel de prélavage, un matériel de lavage et un matériel de rinçage final, des pompes de circulation refoulant l'eau vers les circuits à nettoyer à travers la conduite fermée et des tuyauteries de retour pour ramener l'eau revenant des circuits à nettoyer vers des réservoirs.

L'invention va être maintenant décrite plus en détail à propos de modes de réalisation particuliers représentés sur les dessins ci-annexés, mais qui ne sont nullement limitatifs.

La fig. 1, de ces dessins, est un schéma d'ensemble d'une installation pour la mise en œuvre du procédé conforme à l'invention.

La fig. 2 est un schéma d'une chaîne de nettoyage automatique pour l'installation de la fig. 1.

La fig. 3 est une vue schématique partiellement en coupe transversale, et partiellement en élévation d'un appareil mélangeur.

La fig. 4 est une coupe transversale schématique d'une vis double d'alimentation.

La fig. 5 est une vue schématique partielle, en plan, de la vis de la fig. 4.

La fig. 6, enfin, est un schéma d'une machine continue regroupant plusieurs postes de traitement intermédiaire de la pâte.

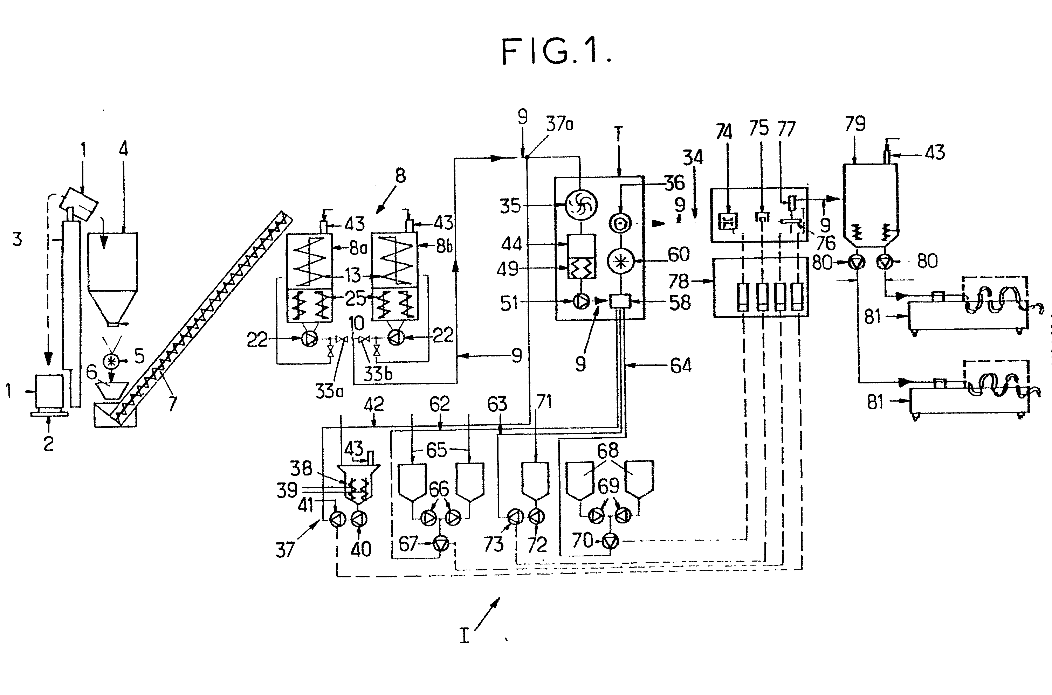

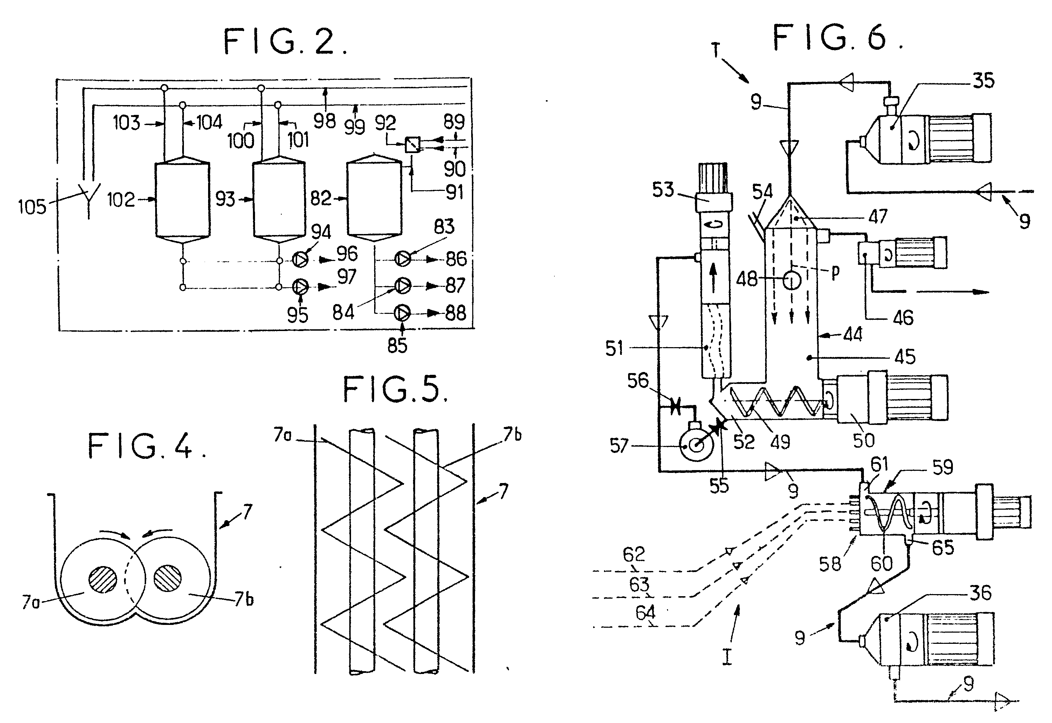

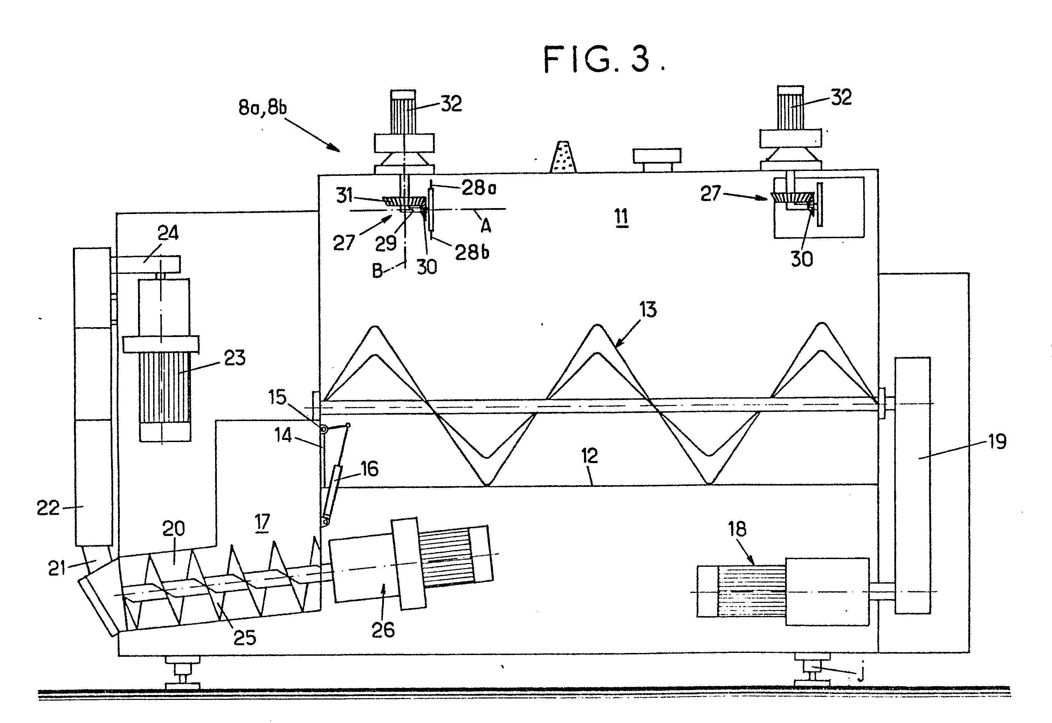

En se reportant aux dessins, notamment à la fig. 1, on peut voir une installation pour la production en continu de pâtes fines de charcuterie, à partir de divers produits carnés. Par exemple, pour la fabrication de saucisses, ces produits carnés peuvent comprendre divers morceaux de bœuf tels que bœuf maigre, bœuf gras, parure de poitrine, surfine, etc. Ces divers produits sont versés les uns après les autres dans une benne 1 qui repose sur une bascule 2. Chacun de ces composants est déposé dans la benne avant que le composant suivant n'y soit introduit. Après chaque pesée, ou bien toutes les deux ou trois pesées, la benne 1 est élevée et basculée au moyen d'un élévateur basculeur 3 de telle sorte que le contenu de la benne soit déversé dans un silo 4 d'alimentation d'un broyeur 5. Ce broyeur 5 effectue un pré-broyage des produits carnés et fournit, à sa sortie, un mélange pré-broyé ou pré-mêlé. A titre d'exemple numérique, non limitatif, les particules de la pré-mêlée sortant du broyeur 5 peuvent avoir un diamètre de l'ordre de 8 mm. Le broyeur 5 alimente, par gravité, la trémie ouverte 6 d'un dispositif élévateur 7 qui permet de véhiculer la pré-mêlée jusqu'au dispositif mélangeur 8. Le dispositif élévateur 7 peut être constitué par une vis double 7a, 7b (fig. 4 et 5) d'alimentation. Les spires des vis 7a, s'interpénètrent profondément pour s'opposer à un mouvement de rotation de la matière qui empêcherait la progression axiale; les vis 7a, 7b tournent en sens contraire l'une par rapport à l'autre et ont des pas inversés de telle sorte que la progression axiale commandée par chaque vis s'effectue dans le même sens, de bas en haut. Un tel dispositif élévateur à vis double est particulièrement approprié pour une matière qui entraîne une perte de charge importante dans les canalisations.

Dans le cas d'une matière qui n'entraîne pas de perte de charge trop importante dans les canalisations, il est possible de la véhiculer entre la sortie du broyeur 5 et l'entrée du dispositif mélangeur 8 par un système à pompe et canalisation.

Selon une variante, on peut alimenter directement le broyeur 5, sans passer par le silo 4.

Le dispositif mélangeur 8 comprend deux appareils mélangeurs 8a, 8b, destinés à alimenter alternativement, et en permanence, une conduite fermée 9, branchée sur la sortie 10 du dispositif mélangeur. Aussitôt qu'un des appareils mélangeurs 8a, 8b est vide, on envoie la pré-mêlée depuis la sortie du broyeur 5 vers l'appareil mélangeur vide 8a, 8b, à l'aide de l'appareil élévateur 7. Cet appareil 7 peut être disposé entre les deux appareils mélangeurs 8a, 8b, avec sa trémie 6 située à même distance des mélangeurs 8a, 8b; l'appareil 7 est dirigé vers l'un ou l'autre des appareils mélangeurs 8a, 8b, par un mouvement de rotation autour d'un axe vertical traversant la trémie 6.

Au moment où un appareil mélangeur 8a, 8b, commence à alimenter la conduite 9, il contient une masse déterminée parfaitement homogène. La conduite 9 sera ainsi alimentée, jusqu'à épuisement de cette masse, en un produit de composition constante.

Selon une variante, on pourrait alimenter directement la conduite 9 par une masse d'un mélange de pré-mêlée homogénéisé, préparé dans un autre atelier.

Chaque appareil mélangeur 8a, 8b, représenté plus en détail sur la fig. 3, comprend une chambre de mélange 11 à fond 12 horizontal, munie d'une vis mélangeuse à ruban 13, à axe horizontal, disposée dans la chambre 11 qui constitue un compartiment fermé; une porte 14 articulée sur un axe 15 et commandée par un vérin 16 est prévue à une extrémité inférieure de la chambre 11 pour permettre, après brassage suffisant, l'évacuation du mélange vers une zone fermée 17. La vis à ruban 13 est entraînée en rotation à une vitesse réglable par l'intermédiaire d'un moteur 18 et d'un réducteur 19.

La zone 17 est prolongée par un canal 20 incliné vers le bas et se raccordant à l'entrée 21 d'une pompe volumétrique 22 de refoulement. Cette pompe 22 est avantageusement constituée par une pompe à rotor excentré, à axe vertical à faible vitesse de rotation, de l'ordre de quelques dizaines de tours par minute. La pompe 22 est entraînée en rotation, à vitesse réglable, par un moteur électrique 23 et un réducteur 24. Le gavage de la pompe 22 est assuré par une double vis sans fin 25 comportant, d'une manière semblable à celle représentée sur les figs 4 et 5, deux vis à pas inversés, tournant en sens contraire et dont les filets s'interpénètrent profondément. La double

vis de gavage 25 est entraînée par un moto-réducteur 26.

La chambre de mélange 11 est équipée, à sa partie supérieure, d'un système de nettoyage comprenant plusieurs dispositifs tels que 27 (par exemple deux dispositifs comme représenté sur la fig. 3) permettant de faire tourner des jets d'eau autour d'un axe horizontal A lequel axe est lui-même entraîné en rotation autour d'un axe vertical B. Pour chaque dispositif 27, les jets d'eau de nettoyage sont fournis par deux buses 28a, 28b, diamétralement opposées par rapport à l'axe A; ces buses sont montées rotatives, autour de l'axe A, sur un bras 29; elles sont liées en rotation à un engrenage conique 30 axé sur A. Cet engrenage 30 coopère avec un autre engrenage conique 31 axé sur B. L'engrenage 31 est monté fixe par rapport à la paroi de la chambre 11 de telle sorte que l'entraînement en rotation du bras 29 autour de l'axe B, par un moteur électrique 32, provoque la rotation de l'engrenage 30 et des buses 28a, 28b, autour de l'axe A du fait de la coopération de l'engrenage 30 avec l'engrenage fixe 31. Ce dispositif de nettoyage à double mouvement de rotation, permet un impact efficace des jets d'eau sur toutes les surfaces de la chambre 11 à nettoyer.

Les moyens de lavage peuvent être complétés par des boules à aspersion (non représentées) assurant un débit d'eau de lavage important.

Comme visible sur la fig. 1, le refoulement de chaque pompe 22 des appareils mélangeurs 8a, 8b, est relié à la conduite fermée 9 par l'intermédiaire d'une électro-vanne 33a, 33b.

Les pompes 22 permettent de faire circuler la pâte évacuée des appareils mélangeurs 8a, 8b, en un flux continu dans la conduite 9 depuis la sortie du dispositif mélangeur 8 en direction d'une zone 34 (fig. 1) de fin de traitement.

Chaque appareil 8a, 8b, est monté sur des pieds équipés de capteurs de charge j (fig. 3) permettant de mesurer le poids de l'appareil et de sa charge.

Divers appareils de traitement en continu de la pâte, décrits en détail ci-après, et formant un ensemble T, sont placés sur la conduite 9.

Des moyens d'injection en continu I d'un débit d'additifs sont prévus en un ou plusieurs points de la conduite 9, ces moyens d'injection I comprenant des moyens pour régler le débit d'additifs en fonction du débit de pâte du flux continu, et des résultats de dosage de la pâte obtenue dans la zone de fin de traitement 34.

Les appareils de traitement T, représentés plus en détail sur la fig. 6, comprennent des moyens de broyage complémentaire en continu de la pâte provenant des appareils mélangeurs 8a, 8b; ces moyens de broyage complémentaire sont placés en deux zones différentes du flux continu.

Un premier broyeur fin 35 reçoit la pré-mêlée et la transforme en une pâte semi-fine. La section de broyage fin de ce broyeur 35 comprend des couteaux tournants frottant sur des filières fixes avec une friction réglable en marche. Un second broyeur ou émulsionneur 36 situé en aval du broyeur 35, sur la conduite 9, est prévu pour donner à la pâte semi-fine sa texture finale.

A titre indicatif, mais non limitatif, la plus grande dimension des particules à la sortie du broyeur 35 peut être de l'ordre de 5 mm et, à la sortie de l'émulsionneur 36, de l'ordre de 2 mm.

Le broyeur-émulsionneur 36 est pourvu de couteaux tournants et de couteaux fixes dont l'écartement peut être réglé en marche.

Les moyens d'injection I des additifs, pour ajuster la composition chimique de la pâte, comprennent pour chaque additif une canalisation d'injection se raccordant à la susdite conduite 9 et des moyens de pompage à débit réglable de l'additif dans la canalisation associée.

Avantageusement, les moyens d'injection I comprennent des moyens 37 d'injection de corps gras raccordés à la conduite 9 en 37a, en amont du broyeur fin 35. Les moyens d'injection 37 comprennent une cuve 38 contenant le gras (ou corps gras) et munie de deux vis sans fin 39, placées sur son fond, propres à pousser le gras dans une pompe de gavage 40 dont le rôle est de gaver une pompe volumétrique de dosage 41 dont la vitesse de rotation, et donc le débit, est réglable; cette pompe 41 peut être également du type à rotor excentré. Le refoulement de cette pompe 41 est raccordé par une tuyauterie 42 à une zone de la conduite 9 située en amont (suivant le sens d'écoulement de la pâte dans la conduite 9) du broyeur 35. Pour maintenir le gras à une température relativement basse, de l'ordre de $-5\,°C$, dans la cuve 38, un système 43 d'injection de fluide réfrigérant, par exemple de neige carbonique, est prévu sur cette cuve 38. Des systèmes d'injection de flux de réfrigérant semblables et désignés par la même référence numérique sont prévus sur les autres chambres ou cuves, notamment en 8a, 8b.

La cuve 38 peut être agencée d'une manière semblable à la chambre de mélange 11 représentée sur la fig. 3, mais de préférence avec un fond en pente vers la sortie. La vis à ruban 13 est en outre remplacée par une vis d'Archimède car on cherche uniquement à «pousser» le produit, et non pas à assurer son mélange tout en le poussant. On peut éventuellement séparer la cuve 38 en deux cuves élémentaires.

Un appareil 44 de dégazage en continu de la pâte est disposé sur la conduite 9, entre les deux broyeurs complémentaires 35, 36, en aval du broyeur 35. Cet appareil 44, comme mieux visible sur la fig. 6, comprend un corps 45, formant enceinte verticale, raccordé à la conduite 9, enceinte dans laquelle la pâte p, schématisée par des tirets, glisse de haut en bas. Cette enceinte est mise sous vide au moyen d'une pompe à vide 46 reliée à la zone supérieure de l'enceinte. Pour accroître l'action du vide, on fait pénétrer la pâte sous forme de «spaghetti», dans l'enceinte 45, en utilisant une buse 47, à la partie supérieure de cette enceinte, munie de plaque perforée de nombreux trous de petit diamètre. Un hublot 48 permet de contrôler visuellement l'écoulement de la pâte. A la base de l'enceinte 45, la pâte est reprise par une double vis sans fin 49, dont l'agencement peut être semblable à celui qui a été décrit avec référence aux figs 4 et 5. Cette double vis 49 est entraînée à une vitesse réglable par un variateur de vitesse 50, ce qui permet de maintenir à une faible valeur la quantité de produit à la base de l'enceinte 45. La double vis 49 assure le gavage d'une pompe volumétrique 51, de préférence à rotor excentré à axe vertical. La double vis 49, dans la zone située au-dessous de l'enceinte 45, est formée par un ruban hélicoïdal dont l'action de mélange a pour but de régulariser la composition de la pâte semi-fine. La vis 49 se prolonge, dans un canal 52 de raccordement avec l'entrée de la pompe 51, par plusieurs spires pleines de façon à assurer le gavage de cette pompe 51. Cette pompe 51 est capable de fournir un débit constant et de refouler la pâte avec une pression suffisante pour traverser toutes les sections suivantes. Le débit de cette pompe 51 est réglé par un variateur de vitesse 53 qui permet de maintenir le débit de la pompe 51 égal au débit de pâte pénétrant dans l'enceinte 45 de dégazage. On maintient ainsi cette enceinte 45 presque vide.

L'enceinte 45 est, en outre, munie, à sa partie supérieure, d'un ajutage 54 permettant d'introduire de la glace sous forme de grains de diamètre de quelques millimètres, en vue du refroidissement de la pâte. Le débit d'introduction des grains de glace dans l'enceinte 45 est avantageusement réglable par paliers.

Pour le nettoyage de l'installation, du fait que les débits d'eau de lavage circulant dans la conduite 9 sont importants, et supérieurs au débit que pourrait laisser passer la pompe 51, on prévoit un raccordement entre l'entrée et la sortie de cette pompe 51 par l'intermédiaire d'électro-valves 55, 56 et d'une pompe à grand débit 57, par exemple une pompe centrifuge.

Les moyens I d'injection d'additifs peuvent comprendre un dispositif 58 d'injection dans la canalisation 9 entre les deux broyeurs complémentaires 35, 36, plus précisément dans une zone de la conduite 9 située en aval de la pompe 51. Ce dispositif d'injection 58 est constitué par un corps cylindrique 59 (fig. 6) à l'intérieur duquel tourne une vis-ruban 60 entraînée par un moto-variateur. La pâte de la pré-mêlée pénètre par un orifice 61, raccordée à la conduite 9, dans le corps cylindrique 59. Des canalisations telles que 62, 63, 64 sont également raccordées à des orifices débouchant dans le corps 59, pour l'injection d'additifs. Par exemple la canalisation 62 sert à l'injection des assaisonnements, la canalisation 63 à l'injection d'eau, et la canalisation 64 à l'injection de sel. La vis-ruban 60 combinée avec la disposition des orifices, conduit à une composition de la pâte parfaitement homogène à la sortie 65 du corps 59, cette sortie 65 étant reliée par un autre tronçon de la conduite 9 à l'entrée du broyeur-émulsionneur 36.

Le mélange parfaitement homogène, pourra être réalisé par d'autres systèmes que la vis ruban 60 sans sortir pour cela du cadre de l'invention.

Dans le corps d'injection 59, la composition de la pâte se modifie de telle sorte qu'à la sortie 65, cette composition soit devenue celle souhaitée pour la pâte fine arrivant dans la zone 34.

L'injection des assaisonnements et du sel est effectuée par voie liquide sous forme de suspension (et/ou de solution). Comme visible sur la fig. 1, le doseur d'assaisonnement comprend deux cuves 65 munies chacune d'une pompe de gavage 66 qui assure en même temps une recirculation dans la cuve afin de maintenir l'homogénéité de la suspension. Une pompe de dosage 67, débitant dans la canalisation 62, aspire sous une pression contrôlée grâce à l'action de la pompe de gavage 66 qui alimente ladite pompe 67. Ces conditions d'alimentation rendent la pompe de dosage 67 capable de délivrer à chaque course un volume de «soupe» d'assaisonnement et donc un volume d'assaisonnement pur bien précis.

D'une manière semblable, le dosage de solution de sel ou de saumure comporte deux cuves 68, destinées à alimenter alternativement la canalisation 64; pendant que l'une des cuves assure l'alimentation de la canalisation, un autre volume de saumure est préparé dans l'autre cuve. Chaque cuve est pourvue d'une pompe de gavage 69 qui assure en même temps une recirculation dans la cuve afin de maintenir l'homogénéité de la suspension du sel non dissous dans l'eau. Une pompe de dosage 70 aspire sous pression contrôlée grâce à l'action de la pompe de gavage 69 utilisée.

Le doseur d'eau comprend une seule cuve 71 contenant l'eau, pourvue d'une pompe de gavage 72 qui assure une recirculation de l'eau dans la cuve, avec passage à travers un réfrigérant afin de maintenir la température de l'eau de dosage à une valeur déterminée, par exemple 4 à 5°C. Une pompe de dosage 73 dont l'entrée est branchée sur le refoulement de la pompe de gavage 72, aspire sous une pression contrôlée grâce à l'action de cette pompe de gavage. Ces conditions d'alimentation améliorent l'effet volumétrique de la pompe de dosage 73.

Les vitesses de rotation des diverses pompes de dosage assurant l'injection des additifs, c'est-à-dire les vitesses des pompes 41 (pour le gras) 67 (pour les assaisonnements) 70 (pour la saumure) et 73 (pour l'eau) sont réglées en fonction du débit de la pâte circulant dans la conduite 9, et en fonction des résultats des dosages effectués sur la pâte finie arrivant dans la zone de fin de traitement 34.

Selon une variante avantageuse, tous les additifs peuvent être injectés en amont du broyeur fin 35, par exemple avec le corps gras en 37a. Une seule canalisation d'injection est alors prévue pour l'ensemble du corps gras et des additifs. On peut effectuer l'injection des additifs sous forme de poudre. Dans une telle variante, le mélangeur 58 n'existe plus et on n'injecte que de l'eau entre la pompe 51 et la vis ruban 60.

Les dosages ou analyses peuvent être effectués manuellement, notamment par prélèvement d'un échantillon de pâte finie à intervalle de temps réguliers, par exemple, toutes les 8 minutes; en fonction des résultats d'analyse obtenus, l'opérateur peut agir sur les moto-variateurs entraînant les pompes et ajuster leur débit.

On peut envisager, également, une analyse en continu de la pâte finie arrivant dans la zone 34 à l'aide de capteurs appropriés; les grandeurs fournies par ces capteurs sont transformées en signaux de commande des pompes de dosage. On a, alors, une régulation automatique de la composition de la pâte. On a schématiquement représenté sur la fig. 1, un débitmètre 74, un capteur 75 propre à mesurer la teneur en eau, un capteur 76 propre à mesurer la teneur en sel, un capteur 77 propre à mesurer la teneur en un composant chimique tel que les lipides. Les informations fournies par ces capteurs sont envoyées à un calculateur 78 qui, en fonction de la composition souhaitée pour la pâte finie, dans la zone 34, envoie les ordres appropriés, sous forme de signaux de commande, aux variateurs entraînant les pompes de dosage.

La conduite 9 se poursuit au-delà des capteurs de mesure éventuels pour déboucher dans un silo de stockage 79. On rappelle que la pâte fine arrive dans ce silo sous l'action de la pompe 51 placée à la sortie de l'enceinte de dégazage 45. Si le silo 79 est trop éloigné de la pompe 51, une pompe relais peut être prévue immédiatement en aval du broyeur 36. Une telle pompe relais ou pompe de reprise, sur la conduite 9, en sortie du broyeur 36 est, de toute façon, avantageuse, même si le silo 79 n'est pas éloigné, car elle évite une contre-pression dans le broyeur 36. Une telle contre-pression est génératrice d'échauffement dans le broyeur 36; en outre, le fonctionnement en continu de ce dernier n'est pas entièrement satisfaisant si la pression en aval, liée notamment aux pertes de charge, est variable. Le silo de stockage 79 est agencé sous une forme semblable à la chambre 11 de mélange (fig. 3) avec une vis ruban. La hauteur de stockage de la pâte est réduite pour éviter un phénomène de déstabilisation de l'émulsion. Dans le cas de pâte fine de charcuterie, pour la fabrication de saucisses, il est souhaitable que cette hauteur de stockage soit inférieure à une hauteur de 1,20 m. Il n'est pas nécessaire de prévoir de vis de gavage semblables à la vis 25 de la fig. 3, car la pâte fine constitue un produit plus fluide et la vis à ruban est suffisante pour pousser le produit vers les pompes 80 qui alimentent les machines 81 de mise sous boyau.

Des moyens de nettoyage automatiques de la chaîne de fabrication sont prévus et représentés sur la fig. 2.

Il convient de noter qu'avant de mettre en action les moyens de nettoyage automatiques, après l'arrêt de la chaîne de fabrication, les tuyauteries et les cuves sont débarrassées tout d'abord du produit qu'elles peuvent encore contenir. Dans les tuyauteries on peut déplacer et récupérer automatiquement le produit restant en le poussant par un corps gras peu coûteux, ou bien par de l'eau ou de l'air sous pression. On peut aussi vider les tuyauteries au moyen d'une balle poussée à l'air comprimé; les capacités, enceintes ou cuves destinées à contenir de la matière, peuvent être munies à leur point le plus bas d'une porte d'accès permettant la récupération manuelle aisée de la plus grande partie du produit restant.

La station de nettoyage automatique est maintenant décrite avec référence à la fig. 2, en combinaison avec la fig. 1.

La station de nettoyage automatique comprend un matériel de prélavage qui se compose d'un réservoir d'eau 82 dans lequel aspirent trois pompes de circulation 83, 84, 85 qui refoulent l'eau vers les circuits à nettoyer au moyen de tuyauteries 86, 87, 88. L'eau revenant des circuits à nettoyer retourne dans le réservoir 82 par l'intermédiaire de tuyauteries 89, 90, 91. Avant de retourner dans le réservoir 82, l'eau qui revient du circuit à nettoyer traverse un tamis 92 qui a pour but de retenir les traces de produits ou de corps gras ayant servi à la récupération. Avantageusement, le tamis 92 peut être prévu rotatif afin de réduire l'effet de colmatage, et il peut être placé à l'intérieur même du réservoir 82 afin de limiter les conséquences d'un débordement du tamis dû au colmatage.

Le matériel de lavage comprend un réservoir 93 d'eau chaude additionnée de détergent, dans lequel aspirent deux pompes de circulation 94, 95 qui refoulent la solution détergente vers les circuits à nettoyer au moyen des tuyauteries 96, 97. La solution détergente revenant des circuits à nettoyer retourne dans le réservoir 93 par l'intermédiaire de tuyauteries 98, 99, 100, 101.

Un matériel de rinçage final comprend un réservoir d'eau 102 dans lequel aspirent les deux pompes de circulation 94, 95 déjà prévues pour le réservoir 93. Ces deux pompes refoulent l'eau de rinçage final vers les circuits à nettoyer au moyen des tuyauteries 96, 97. L'eau de rinçage final revenant des circuits à nettoyer retourne dans un premier temps, dans le réservoir de pré-lavage 82 puis, dans un deuxième temps, dans le réservoir 102 par l'intermédiaire de tuyauteries 103, 104.

Pour le nettoyage des canalisations, on fait passer un grand débit d'eau sous une pression relativement faible (par exemple réseau d'alimentation sous 3 bars). Par contre, pour le nettoyage des enceintes de grand volume, du genre de la chambre 11, on utilise un effet d'impact de jets d'eau sous forte pression au lieu de l'effet d'entraînement par grand débit, pratiquement impossible à réaliser en raison des grandes sections de passage; ces jets d'eau sont obtenus à partir de dispositifs tels que 27 alimentés sous une pression d'eau plus élevée, par exemple 12 bars. Une solution économique pour assurer ces deux types d'alimentation à pressions différentes (3 bars et 12 bars) consiste à prévoir un réseau général d'alimentation en eau sous basse pression (3 bars par exemple) et, pour chaque enceinte ou groupe d'enceintes de volume important, un surpresseur destiné à alimenter les jets d'eau sous une pression plus élevée (12 bars).

Les canalisations 98, 99 comportent des prolongements, commandés par des vannes appropriées, vers l'évacuation 105 à l'égout. En fonction de l'importance de l'installation et du temps admis pour réaliser le nettoyage, la station de nettoyage peut comprendre un nombre plus grand ou plus petit de réservoirs et de pompes sans sortir pour cela du cadre de l'invention.

Il est à noter que toutes les parties métalliques en contact avec la pâte sont réalisées en un métal inaltérable notamment en acier inoxydable. Il en est de même pour les réservoirs et les tuyauteries de la station de nettoyage automatique.

Le fonctionnement de l'installatiojn résulte immédiatement des explications précédentes et seules de brèves explications seront données au sujet de ce fonctionnement.

Les divers produits carnés sont introduits par charges successives dans la benne 1, puis versés dans le silo 4.

Dès qu'un appareil mélangeur 8a, 8b, est vide, on ouvre la trappe de vidange, à ouverture réglable, du silo 4 et on alimente, par gravité, le broyeur 5; les produits pré-broyés, formant la pré-mêlée, tombent dans la trémie 6 et sont transportés, par le dispositif 7, vers l'appareil mélangeur vide 8a, par exemple.

Naturellement, aussitôt que l'appareil 8a s'est trouvé vide, l'appareil mélangeur 8b qui était plein a pris le relais pour assurer l'alimentation permanente en un flux continu de la conduite 9.

La conduite 9 est alimentée, à partir de l'un des appareils mélangeurs 8a, 8b, en un mélange parfaitement homogène, dont la composition reste constante jusqu'à ce que l'appareil mélangeur soit vidé. En effectuant une analyse de ce mélange avant de l'envoyer dans la canalisation 9, on peut déterminer un premier réglage grossier des débits d'additifs en vue d'obtenir la composition souhaitée pour la pâte finie; les moyens 40, 67, 70, 73, 78 pour l'injection des additifs permettront d'effectuer avec précision un réglage fin par exemple à partir d'une position de pré-réglage moyen correspondant à la composition du mélange servant à alimenter la conduite 9. Ce pré-réglage moyen pourra être réajusté au moment où un autre des appareils mélangeurs 8a, 8b est mis en service pour alimenter la conduite 9, en fonction de la composition du mélange homogène de l'appareil mélangeur en question.

La pâte traverse l'ensemble T pour y subir les traitements expliqués précédemment. Les additifs sont ajoutés, en un débit continu, à la pâte, dans les conditions expliquées précédemment.

En avant du corps 59 (fig. 1 et 6) d'injection des additifs, la pâte a sa composition finale mais n'est pas encore dans sa texture finale, les dimensions des particules de la pâte étant, par exemple, dans le cas d'une pâte fine de charcuterie de l'ordre de 2 à 4 mm.

La texture finale est obtenue à l'aide de l'émulsionneur 36; toujours dans le cas de pâtes fines de charcuterie, à titre d'exemple non limitatif, on peut indiquer que les particules ont des dimensions de l'ordre de 0,1 à 1,4 mm en aval de cet émulsionneur 36.

A l'arrêt de la chaîne de fabrication, on procède au nettoyage, après avoir débarassé les tuyauteries et les cuves comme expliqué précédemment.

Les canalisations 86, 87 et 88, 96 et 97 de la fig. 2 sont reliées à la conduite 9 et aux divers appareils de la chaîne par des tuyauteries et des vannes non représentées.

La phase de pré-lavage est effectuée à très grand débit, à l'eau tiède ou froide, pour réaliser un balayage hydraulique des cuves, réservoirs, matériel et tuyauteries. Toutes les traces de viande sont arrachées des parois et véhiculées jusqu'au tamis 92 où elles sont collectées. A la fin de cette phase, toutes les surfaces métalliques sont exemptes de particules de viande mais sont encore grasses.

Le lavage est réalisé au moyen de la solution détergente du réservoir 93, cette solution étant à une température de l'ordre de 50 à 70 °C. Cette phase de lavage effectuée à débit moyen assure la dissolution des graisses qui tapissent les parois métalliques. A la fin de cette phase, toutes les parois métalliques sont propres et dégraissées, mais elles sont encore en contact avec la solution détergente.

Un rinçage final est réalisé au moyen d'eau froide. Cette phase effectuée à débit moyen élimine les traces de détergent. A la fin de cette phase, toutes les parois métalliques sont propres, dégraissées et en contact avec de l'eau pure.

Le procédé et l'installation de l'invention permettent de maîtriser la composition analytique du produit et d'assurer une composition au moindre coût. Les pertes de matière sont réduites. Le rendement est amélioré. Le débit de pâte fine peut atteindre des valeurs élevées, notamment des valeurs de plusieurs tonnes/heure.

**Revendications**

1. Procédé pour la production en continu de pâtes fines de charcuterie, à partir de divers produits carnés en vue de fabriquer des produits du type saucisses, rillettes, pâtés, etc., selon lequel on mélange les divers produits carnés, qui ont subi un broyage, on fait circuler le mélange continuellement depuis la sortie (10) de la zone de mélange jusqu'à la zone de fin de traitement (34) dans une conduite (9), et on ajuste la composition chimique du mélange, notamment en corps gras et en eau, en injectant en continu, en un ou plusieurs points de la conduite (9), les additifs appropriés de manière, après passage dans divers postes de traitement intermédiaires qui peuvent être prévus sur la conduite (9), à obtenir, dans une zone de fin de traitement (34), une pâte fine prête à l'emploi, caractérisé par le fait que, depuis la susdite sortie (10) de la zone de mélange jusqu'à la susdite zone de fin de traitement (34), la pâte circule en flux continu dans la conduite (9) ou analogue qui est fermée, et par le fait que les débits des additifs injectés en un ou plusieurs points (37a, 58) de la conduite fermée (9) sont réglés en fonction, d'une part, du débit de pâte du flux continu et, d'autre part, des résultats d'analyse de la pâte fine obtenue dans la zone de fin de traitement (34).

2. Procédé selon la revendication 1, caractérisé par le fait qu'un mélange pré-broyé est véhiculé jusqu'à un dispositif mélangeur (8) comprenant au moins deux appareils mélangeurs (8a, 8b) destinés à alimenter alternativement et en permanence la conduite fermée (9) branchée sur la sortie (10) du dispositif-mélangeur (8).

3. Procédé selon la revendication 1 ou 2, caractérisé par le fait qu'un broyage complémentaire est réalisé en au moins deux zones différentes (35, 36) du flux continu et qu'entre les deux zones de broyage complémentaire (35, 36) on effectue un dégazage de la pâte.

4. Procédé selon la revendication 3, caractérisé en ce qu'on introduit de la glace sous forme de grains de diamètre réduit, dans la pâte au niveau de la zone de dégazage (44) pour le refroidissement de la pâte.

5. Procédé selon la revendication 3 ou 4, caractérisé par le fait que, dans la zone de dégazage (44), on fait glisser la pâte (p) de haut en bas dans une enceinte verticale (45) mise sous vide, la pâte étant reprise à la base de l'enceinte (45), notamment par une vis sans fin (49) assurant le gavage d'une pompe volumétrique (51).

6. Procédé selon l'une quelconque des revendications précédentes, caractérisé par le fait que les additifs, notamment les corps gras, sont injectés en amont (en 37a) de la première zone de broyage complémentaire (35).

7. Installation pour la production en continu de pâtes fines de charcuterie, à partir de divers produits carnés, en vue de fabriquer des produits du type saucisses, rillettes, pâtés, etc. comprenant des moyens d'alimentation en un mélange pré-broyé des divers produits carnés, une conduite (9) ou analogue pour faire circuler le mélange continuellement depuis la sortie (10) de la zone de mélange jusqu'à la zone de fin de traitement (34), divers appareils (T) de traitement en continu de la pâte et des moyens d'injection en continu d'additifs, notamment de corps gras et d'eau, en un ou plusieurs points de l'installation, caractérisée par le fait que la susdite conduite (9) s'étendant depuis la susdite sortie (10) des moyens d'alimentation jusqu'à la susdite zone de fin de traitement (34) est une conduite fermée ou analogue sur laquelle peuvent être prévus les susdits divers appareils (T) de traitement de la pâte en continu, et par le fait qu'elle comprend également des moyens de pompage (22, 51) permettant de faire circuler en un flux continu la pâte dans cette conduite fermée depuis la susdite sortie (10) jusqu'à la susdite zone de fin de traitement (34), et des moyens (74, 75, 76, 77) prévus dans la zone de fin de traitement (34) et permettant d'analyser la pâte finie, ces moyens d'analyse étant combinés avec des moyens (40, 67, 70, 73, 78) permettant de régler le débit d'additifs en fonction du débit de pâte du flux continu et des résultats de l'analyse de la pâte obtenue dans la zone de fin de traitement (34).

8. Installation selon la revendication 7, caractérisé par le fait que les moyens d'alimentation en mélange pré-broyé comprennent un dispositif mélangeur (8) sur la sortie (10) duquel est branchée la conduite fermée (9), ce dispositif mélangeur comprenant au moins deux appareils mélangeurs (8a, 8b) destiné à alimenter alternativement, et en permanence, la conduite fermée (9).

9. Installation selon la revendication 8, caractérisée par le fait que les deux appareils mélangeurs (8a, 8b) du dispositif mélangeur (8) sont équipés chacun d'une pompe de refoulement (22), chaque appareil mélangeur comprenant une chambre de mélange (11) avec une vis mélangeuse (13) disposée dans un compartiment fermé de mélange, une porte de communication (14) étant prévue dans ce compartiment (11) pour permettre l'évacuation du mélange qui est refoulé vers l'entrée de la pompe de refoulement (22) volumétrique, cette pompe (22) étant notamment formée par une pompe à rotor excentré disposée avec son axe vertical.

10. Installation selon l'une quelconque des revendications 7 à 9, caractérisée par le fait qu'elle comporte des moyens de broyage complémentaire en continu, prévus sur la conduite fermée (9), comprenant deux broyeurs (34, 36) séparés, situés en deux zones de la conduite, un appareil de dégazage (44) en continu de la pâte étant disposé sur la conduite entre les deux broyeurs complémentaires (35, 36).

11. Installation selon la revendication 10, caractérisée par le fait qu'une pompe relais est prévue immédiatement en aval du second broyeur (36).

12. Installation selon la revendication 10 ou 11, caractérisée par le fait que l'appareil de dégazage (44) comprend un corps (45) formant enceinte verticale, raccordée à la conduite (9), enceinte dans laquelle la pâte (p) glisse de haut en bas, notamment à travers une buse (47) munie d'une plaque perforée de nombreux trous de petit diamètre, l'enceinte (45) étant mise sous vide, la pâte étant reprise à la base de l'enceinte, notamment par une vis sans fin (49) qui assure le gavage d'une pompe volumétrique (51), l'enceinte (45) pouvant être munie, à sa partie supérieure, d'un ajutage (54) permettant d'introduire de la glace notamment sous forme de grains.

13. Installation selon l'une quelconque des revendications 7 à 12, caractérisée par le fait qu'elle comprend une station de nettoyage automatique comprenant un matériel de prélavage (82, 86, 87, 88), un matériel de lavage (93, 96, 97) et un matériel de rinçage final (102), des pompes de circulation (83, 84, 85; 94, 95) refoulant l'eau vers les circuits à nettoyer à travers la conduite fermée (9) et des tuyauteries de retour (98, 99) pour ramener l'eau revenant des circuits à nettoyer vers les réservoirs.

14. Installation selon l'une quelconque des revendications 7 à 13, caractérisée par le fait que les moyens de nettoyage automatique comprennent, pour le nettoyage des chambres, des dispositifs (27) permettant de faire tourner des jets d'eau autour d'un axe horizontal (A) lequel est lui-même entraîné en rotation autour d'un axe vertical (B).

**Claims**

1. A process for the continuous production of fine delicatessen pastes from various meat products for the preparation of products such as wet sausages, rilletes (minced pork), pates or the like wherein the various meat products, which have been crushed, are mixed, the mixture moves continuously from the mixing-zone exit (10) to the end-of-processing zone (34) in a duct (9) and the chemical composition of the mixture, more particularly its fat and water contents, is adjusted by continuous injection of the appropriate additives at one or more places along the duct (9) so that, after passing through various intermediate processing stations which can be disposed along the duct (9), a fine paste ready for use is yielded in an end-of-processing zone, characterised in that from the mixing-zone exit (10) to the end-of-processing zone (34) the paste moves in a continuous flow in the duct or the like (9), which is closed; and the rates of flow of the additives which are injected at one or more places (37a, 58) along the closed duct (9) are controlled in dependence upon the rate of flow of paste of the continuous flux and upon the analysis results of the fine paste yielded in the end-of-processing zone (34).

2. A process according to claim 1, characterised in that a pre-crushed mixture is conveyed to a mixing apparatus (8) comprising at least two mixers (8a, 8b) adapted to supply alternately and continuously the closed duct (9) connected to the output (10) of the mixing apparatus (8).

3. A process according to claim 1 or 2, characterised in that further crushind of the continuous flux is effected in at least two different zones (35, 36) and the paste is degassed between the last-mentioned two zones.

4. A process according to claim 3, characterised in that ice is introduced into the paste in the form of small grains near the degassing zone (44) to cool the paste.

5. A process according to claim 3 or 4, characterised in that in the degassing zone (44) the paste (p) slides down in a vertical enclosure (45) at a negative pressure, the paste being taken up at the bottom of the enclosure (45) inter alia by an endless screw (49) feeding a positive displacement pump (51).

6. A process according to any of the previous claims, characterised in that the additives inter alia the fats are injected upstream (at 37a) of the first supplementary crushing zone (35).

7. An installation for the continuous production of fine delicatessen pastes from various meat products for the preparation of products such as wet sausages, rilletes (minced pork), pates or the like and comprising: means for supplying a duct (9) or the like with a pre-crushed mixture of the various meat products in order to move the mixture continuously from the exit (10) of the mixing zone to the end-of-processing zone (34); various apparatuses (T) for continuously processing the paste; and means for continuously injecting additives, notably fats and water, at one or more parts of the installation, characterised in that the duct (9) extending from the exit (10) to the end-of-processing zone (34) is a closed duct or the like along which the various processing apparatuses (T) can be disposed, and the installation also comprises: pumping means (22, 51) for moving the paste in a continuous flux in the closed duct (9) from the mixing-zone exit (10) to the end-of-processing zone (34); and means (74–77) disposed therein and operative to analyze the finished paste, the analyzing means being combined with means (40, 67, 70, 73, 78) for controlling the rate of flow of additives in dependence upon the rate of flow of paste of the continuous flux and upon the results of the analysis of the paste yielded in the end-of-processing zone (34).

8. An installation according to claim 7, characterised in that the means for supplying the duct (9) with a precrushed mixture comprise a mixing apparatus (8) to whose exit (10) the closed duct (9) is connected, the mixing apparatus (8) comprising at least two mixers (8a, 8b) adapted to supply the closed ducts (9) alternately and continuously.

9. An installation according to claim 8, characterised in that the two mixers (8a, 8b) each have a delivery pump (22) and a mixing chamber (11) with a mixing screw (13) disposed in a closed mixing chamber, the same having a communicating door (14) for removal of the mixture which is delivered towards the inlet of the positive displacement delivery pump (22), the same being embodied notably by a pump having an eccentric rotor with a vertical axis.

10. An installation according to any of claims 7–9, characterised in that it comprises supplementary continuous crushing means disposed along the closed duct (9) and comprising two separate crushers (34, 36) disposed in two zones of the duct (9), an apparatus (44) for continuous degassing of the paste being disposed on the duct (9) between the two supplementary crushers (35, 36).

11. An installation according to claim 10, characterised in that a relay pump is provided immediately downstream of the second crusher (36).

12. An installation according to claim 10 or 11, characterised in that the degassing apparatus (44) comprises a member (45) in the form of a vertical enclosure connected to the duct (9), in which enclosure the paste (p) slides down, notably through a nozzle (47) having a plate pierced with a large number of narrow apertures, the enclosure (45) being at a negative pressure, the paste being taken up at the bottom of the enclosure notably by an endless screw (49) which feeds a positive displacement pump (51), the enclosure (45) possibly having at the top a nozzle (54) for the introduction of ice notably in the form of grains.

13. An installation according to any of claims 7–12, characterised in that it comprises an automatic cleaning station comprising prewashing equipment (82, 86–88), washing equipment (93, 96, 97) and final rinsing equipment (102), circulating pumps (83–85; 94, 95) delivering water to the circuits to be cleaned through the closed duct (9) and return piping (98, 99) to return the water coming from the circuits to be cleaned to the tanks.

14. An installation according to any of claims 7–13, characterised in that the automatic cleaning means comprise for cleaning the chambers facilities (27) for rotating water streams around a horizontal shaft (A) which is rotated around a vertical axis (B).

**Patentansprüche**

1. Verfahren zur kontinuierlichen Herstellung von feinen Fleischpasteten ausgehend von unterschiedlichen Fleischprodukten zur Herstellung von Produkten wie Würsten, Hackfleischprodukten, Pasteten und dgl., gemäss welchem man die unterschiedlichen Fleischprodukte mischt, die einer Zerkleinerung unterworfen wurden, man die Mischung kontinuierlich vom Ausgang (10) der Mischzone bis zur Endbehandlungszone durch eine Leitung (9) durchfliessen lässt und man die chemische Zusammensetzung der Mischung, vor allem die Fettkonsistenz und den Wassergehalt, einstellt, in dem kontinuierlich an einem oder mehreren Punkten der Leitung (9) geeignete Additive hinzufügt werden, so dass man, nach dem Durchgang durch diverse zwischengeschaltete Behandlungsstationen, die in der Leitung (9) vorgesehen sein können, in einer Endbehandlungszone (3, 4) eine feine, gebrauchsbereite Pastete erhält, dadurch gekennzeichnet, dass von dem genannten Ausgang (10) der Mischzone bis zur genannten Endbehandlungszone (34) die Pastetenmasse kontinuierlich die Leitung (9) od.dgl., die geschlossen ist, durchfliesst, und dadurch, dass die Mengen der an einem oder mehreren Punkten (37a, 58) der geschlossenen Leitung (9) hinzugefügten Additive in Abhängigkeit einerseits von der Flussmenge an Pastetenmasse in kontinuierlichem Fluss und andererseits von den Analyseresultaten der feinen Pastete, die man in der Endbehandlungszone (34) erhält, geregelt werden.

2. Verfahren nach Anspruch 1, dadurch gekennzeichnet, dass eine vorzerkleinerte Mischung bis zu einer Mischeinrichtung (8) befördert wird, welche wenigstens zwei Mischgeräte (8a, 8b) aufweist, die bestimmt sind zur wechselweisen und stetigen Speisung der geschlossenen Leitung (9), die am Ausgang (10) der Mischeinrichtung (8) abzweigt.

3. Verfahren nach Anspruch 1 oder 2, dadurch gekennzeichnet, dass eine ergänzende Zerkleinerung bei wenigstens zwei unterschiedlichen Zonen (35, 36) des kontinuierlichen Durchflusses ausgeführt wird und dadurch, dass zwischen den beiden ergänzenden Zerkleinerungsstationen (35, 36) man eine Entgasung der Pastetenmasse bewirkt.

4. Verfahren gemäss Anspruch 3, dadurch gekennzeichnet, dass man Eis in kleiner Körnung in die Pastetenmasse im Bereich der Entgasungszone (44) zum Rückkühlen der Pastetenmasse einbringt.

5. Verfahren gemäss Anspruch 3 oder 4, dadurch gekennzeichnet, dass man in der Entgasungszone (44) die Masse (p) von oben nach unten in einer vertikalen Umhüllung (45), die einem Unterdruck unterworfen ist, gleiten lässt, wobei die Pastetenmasse am unteren Ende der Umhüllung (45) insbesondere von einer Schnecke (49) aufgenommen wird, die das Einstopfen in eine volumetrische Pumpe (51) sicherstellt.

6. Verfahren nach einem der vorangehenden Ansprüche, dadurch gekennzeichnet, dass die Additive, insbesondere die Fettkonsistenz, stromaufwärts (bei 37a) der ersten ergänzenden Zerkleinerungszone (35) zugefügt werden.

7. Vorrichtung zur kontinuierlichen Herstellung von feinen Fleischpasteten, ausgehend von unterschiedlichen Fleischprodukten zur Herstellung von Produkten, wie Würsten, Hackfleischprodukten, Pasteten od.dgl., die Mittel zur Zuführung einer vorzerkleinerten Mischung von unterschiedlichen Fleischprodukten, eine Leitung (9) od.dgl., um die Mischung kontinuierlich von einem Ausgang (10) der Mischzone bis zu eine Endbehandlungszone (34) durchfliessen zu lassen, verschiedene Vorrichtungen (T) zur kontinuierlichen Behandlung der Pastetenmasse und Zuführmittel zur kontinuierlichen Einbringung von Additiven, insbesondere von Fetten und Wasser, an einem oder mehreren Punkten der Vorrichtung umfasst, dadurch gekennzeichnet, dass die genannte Leitung (9), die sich von dem genannten Ausgang (10) der Zuführungsmittel bis zu der genannten Endbehandlungszone (34), eine geschlossene Leitung od.dgl. darstellt, in welcher die oben genannten unterschiedlichen Vorrichtungen (T) zur kontinuierlichen Behandlung der Pastetenmasse vorgesehen sein können, und dadurch, dass sie in gleicher Weise Pumpeinrichtungen (22, 51) aufweist, die es erlauben, die Pastetenmasse in einem kontinuierlichen Fluss durch diese geschlossene Leitung von dem genannten Ausgang (10) bis zur Endbehandlungszone (34) hindurchfliessen zu lassen, und dadurch, dass Mittel (74, 75, 76, 77), die in der Endbehandlungszone (34) vorgesehen sind und es erlauben, die fertige Pastete zu analysieren, wobei diese Analysemittel mit Mitteln (40, 67, 70, 73, 78) kombiniert sind, die es erlauben, die Menge an Additiven in Abhängigkeit der Flussmenge von Pastetenmasse im kontinuierlichen Durchfluss und der Resultate der Analyse der Pastete, die man in der Endbehandlungszone (34) erhalten hat, zu regeln.

8. Vorrichtung gemäss Anspruch 7, dadurch gekennzeichnet, dass die Zuführmittel an vorzerkleinerter Mischung eine Mischeinrichtung (8) über dem Ausgang (10) aufweisen, von welchem die geschlossene Leitung (9) abzweigt, wobei diese Mischeinrichtung wenigstens zwei Mischer (8a, 8b) zur alternativen und kontinuierlichen Versorgung der geschlossenen Leitung (9) aufweist.

9. Vorrichtung nach Anspruch 8, dadurch gekennzeichnet, dass die beiden Mischer (8a, 8b) der Mischeinrichtung (8) jeder mit einer Druckpumpe (22) ausgerüstet ist, wobei jeder Mischer eine Mischkammer (11) mit einer Mischschraube (13) aufweist, die jede in einem geschlossenen Mischbehälter angeordnet ist, wobei eine Verbindungstür (14) in diesem Behälter (11) vorgesehen ist, um die Entleerung der Mischungen zu erlauben, die in Richtung auf den Pumpeneingang der volumetrischen Pumpe (22) gedrückt wird, wobei diese Pumpe (22) insbesondere von einer Pumpe gebildet wird, in welcher der Rotor exzentrisch und die Achse vertikal angeordnet ist.

10. Vorrichtung nach einem der Ansprüche 7 oder 8, dadurch gekennzeichnet, dass sie zwei komplimentäre Einrichtungen zur kontinuierlichen Zerkleinerung aufweist, die in der geschlossenen Leitung (9) vorgesehen sind, und die zwei verschiedene Zerkleinerer (35, 36) aufweisen, welche in zwei Zonen der Leitung angeordnet sind, wobei eine Vorrichtung (44) zur kontinuierlichen Entgasung der Pastetenmasse in der Leitung zwischen den beiden komplimentären Zerkleinerern (35, 36) angeordnet ist.

11. Vorrichtung nach Anspruch 10, dadurch gekennzeichnet, dass eine Verstärkerpumpe unmittelbar stromaufwärts vor dem zweiten Zerkleinerer (36) vorgesehen ist.

12. Vorrichtung nach Anspruch 10 oder 11, dadurch gekennzeichnet, dass die Entgasungseinrichtung (44) ein Gehäuse (45) umfasst, welches eine an der Leitung (9) angeschlossene vertikale Einfassung bildet, in welche die Pastetenmasse (p) von oben nach unten, insbesondere quer durch eine Düse (47), hindurchgleitet, die mit einer mit einer Vielzahl von Löchern kleinen Durchmessers versehenen Scheibe ausgerüstet ist, wobei die Einfassung (45) einem Unterdruck unterworfen ist und wobei die Pastetenmasse am unteren Ende der Umhüllung wieder aufgenommen wird, insbesondere von einer Schnecke (49), die die Beaufschlagung einer volumetrischen Pumpe (51) sicherstellt, wobei die Einfassung (45) in ihrem oberen Bereich mit einer Zuführung (54) ausgerüstet sein kann, die die Hinzufügung von Eis, insbesondere in kleiner Körnung, erlaubt.

13. Vorrichtung nach einem der Ansprüche 7 bis 12, dadurch gekennzeichnet, dass sie eine automatische Reinigungsstation umfasst, die ein Vorwaschmittel (82, 86, 87, 88), ein Waschmittel (93, 96, 97) und ein Endspülmittel (102), Zirkulationspumpen (83, 84, 85; 94, 95), die das Wasser in Richtung der Reinigungskreisläufe zurückdrückt, quer durch die geschlossene Leitung (9), und Rückleitungen (98, 99) zum Rückführen des Wassers, welches von den Reinigungsumläufen kommt, in Reservoirs, aufweist.

14. Vorrichtung nach einem der Ansprüche 7 bis 13, dadurch gekennzeichnet, dass die automatischen Waschmittel zum Reinigen der Kammern Vorrichtungen (27) aufweisen, die es erlauben, Wasserdüsen um eine horizontale Achse (A) zu drehen, die selbst um eine vertikale Achse (B) rotierend angetrieben ist.

FIG.1.

# FIG.2.

# FIG.6.

# FIG.4.

# FIG.5.

0 094 877

# FIG. 3.